(19) Europäisches Patentamt
European Patent Office
Office européen des brevets

(11) Veröffentlichungsnummer: **0 224 077 B1**

(12) **EUROPÄISCHE PATENTSCHRIFT**

(45) Veröffentlichungstag der Patentschrift: **08.08.90**

(51) Int. Cl.⁵: **A01N 43/653**

(21) Anmeldenummer: **86115195.9**

(22) Anmeldetag: **03.11.86**

(54) **Mittel zur Regulierung des Pflanzenwachstums.**

(30) Priorität: **15.11.85 DE 3540525**

(43) Veröffentlichungstag der Anmeldung:
**03.06.87 Patentblatt 87/23**

(45) Bekanntmachung des Hinweises auf die Patenterteilung:
**08.08.90 Patentblatt 90/32**

(84) Benannte Vertragsstaaten:
**DE FR GB IT**

(56) Entgegenhaltungen:
**EP-A- 0 040 345**
**EP-A- 0 054 431**
**EP-A- 0 114 609**
**GB-A- 2 080 795**

**Die Akte enthält technische Angaben, die nach dem Eingang der Anmeldung eingereicht wurden und die nicht in dieser Patentschrift enthalten sind.**

(73) Patentinhaber: **BAYER AG,**
**D-5090 Leverkusen 1 Bayerwerk(DE)**

(72) Erfinder: **Kraatz, Udo, Dr., Andreasstrasse 22 a, D-5090 Leverkusen(DE)**
Erfinder: **Holmwood, Graham, Dr., Krutscheider Weg 105, D-5600 Wuppertal 1(DE)**
Erfinder: **Lürssen, Klaus, Dr., August-Kierspel-Strasse 151, D-5060 Bergisch-Gladbach 2(DE)**

EP 0 224 077 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung betrifft die Verwendung des (-)-Antipoden*) des 2-(4-Chlorphenoxymethyl)-3,3-dimethyl-1-(1,2,4-triazol-1-yl)-butan-2-ols zur Regulierung des Pfanzenwachstums.

Es ist bereits bekannt, daß das Racemat des 2-(4-Chlorphenoxymethyl)-3,3-dimethyl-1-(1,2,4-triazol-1-yl)-butan-2-ols pflanzenwuchsregulierende Eigenschaften besitzt (vgl. EP-OS 0 040 345). Die Wirksamkeit dieses Produktes ist gut; jedoch ist der bei sehr niedrigen Aufwandmengen erzielte Effekt nicht immer befriedigend.

Es wurde nun gefunden, daß sich der (-)-Antipode des 2-(4-Chlorphenoxymethyl)-3,3-dimethyl-1-(1,2,4-triazol-1-yl)-butan-2-ols der Formel

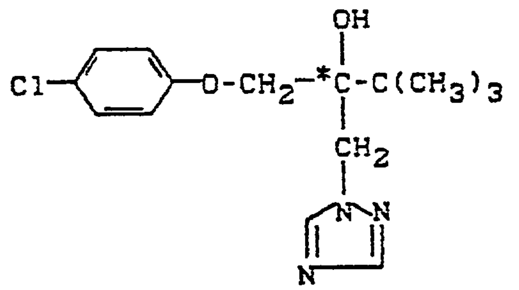

(I)

durch sehr gute pflanzenwuchsregulierende Eigenschaften auszeichnet.

Überraschenderweise besitzt der (-)-Antipode des 2-(4-Chlorphenoxymethyl)-3,3-dimethyl-1-(1,2,4-triazol-1-yl)-butan-2-ols der Formel (I) wesentlich bessere pflanzenwuchsregulierende Eigenschaften als das entsprechende Racemat, das aus dem Stand der Technik als hoch wirksamer Pflanzenwuchsregulator bekannt ist. Im übrigen konnte nicht erwartet werden, daß der erfindungsgemäß verwendbare Wirkstoff sich durch sehr gute pflanzenwuchsregulierende Wirksamkeit hervorhebt, während der (+)-Antipode des 2-(4-Chlorphenoxymethyl)-3,3-dimethyl-1-(1,2,4-triazol-1-yl)-butan-2-ols als Pflanzenwachstumsregulator weitgehend inaktiv ist.

Der erfindungsgemäß verwendbare Wirkstoff ist durch die Formel (I) definiert. In dieser Formel ist das asymmetrisch substituierte Kohlenstoffatom durch ein (*) gekennzeichnet.

Der (-)-Antipode des 2-(4-Chlorphenoxymethyl)-3,3-dimethyl-1-(1,2,4-triazol-1-yl)-butan-2-ols ist bisher noch nicht bekannt. Er läßt sich herstellen, indem man in einer <u>1. Stufe</u> racemisches 2-(4-Chlorphenoxymethyl)-2-tert.-butyl-oxiran der Formel

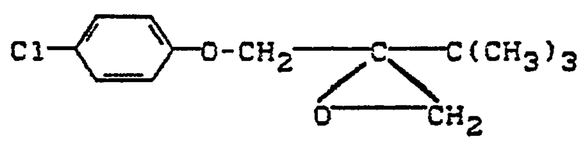

(II)

mit einer starken, optisch aktiven Säure, wie z.B. (+)-Campher-10-sulfonsäure, in Gegenwart eines Verdünnungsmittels, wie z.B. Acetonitril, bei Temperaturen zwischen 10 und 60°C, umsetzt, dann das so erhaltene diastereomere Estergemisch aufgrund der unterschiedlichen physikalischen Eigenschaften der enthaltenen Komponenten trennt und danach in einer <u>2. Stufe</u> die einzelnen Diastereomeren mit 1,2,4-Triazol in Gegenwart eines Verdünnungsmittels, wie z.B. Acetonitril, und gegebenenfalls in Gegenwart einer Base, wie z.B. Kaliumcarbonat, bei Temperaturen zwischen 40 und 120°C umsetzt.

Verwendet man (+)-Campher-10-sulfonsäure als optisch aktive Säure, so kann der Verlauf des oben angegebenen Herstellungsverfahrens durch das folgende Formelschema veranschaulicht werden:

---

*) Unter dem (-)-Antipoden ist hier jeweils dasjenige Enantiomere zu verstehen, das die Schwingungsebene von linear polarisiertem Licht der Natrium-D-Linie nach links dreht.

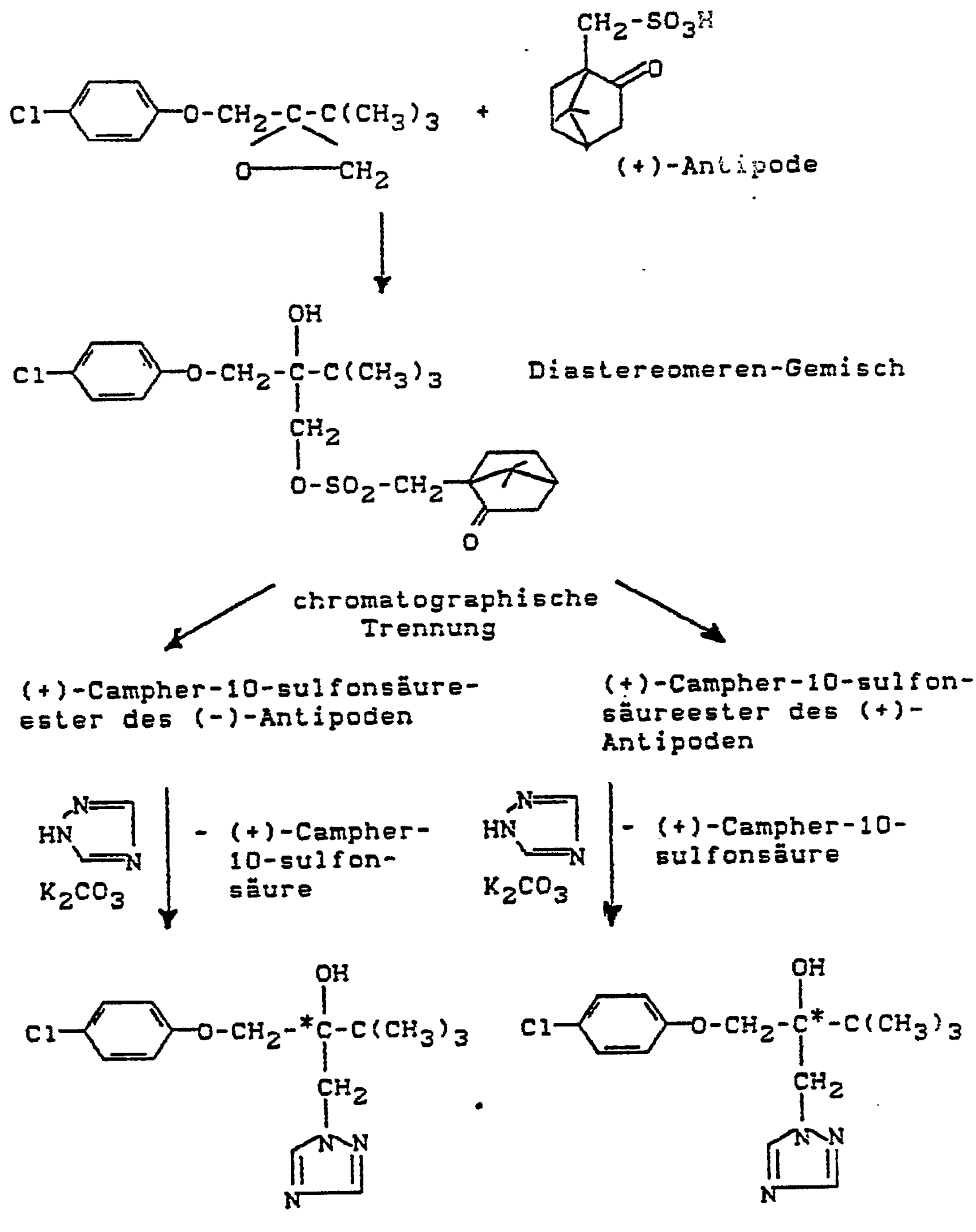


(-)-Antipode (+)-Antipode

Das bei dem oben angegebenen Verfahren als Ausgangsstoff benötigte racemische 2-(4-Chlorphenoxymethyl)-2-tert.-butyl-oxiran der Formel (II) ist bekannt (vgl. EP-OS 0 040 345).

Wie aus dem oben angegebenen Formelschema ersichtlich ist, läßt sich nach dem beschriebenen Verfahren nicht nur der (-)-Antipode, sondern auch der (+)-Antipode des 2-(4-Chlorphenoxymethyl)-3,3-dimethyl-1-(1,2,4-triazol-1-yl)-butan-2-ols herstellen.

Der erfindungsgemäße Wirkstoff greift in den Metabolismus der Pflanzen ein und kann deshalb als Pflanzenwachstumsregulator eingesetzt werden.

Für die Wirkungsweise von Pflanzenwachstumsregulatoren gilt nach der bisherigen Erfahrung, daß ein Wirkstoff auch mehrere verschiedenartige Wirkungen auf Pflanzen ausüben kann. Die Wirkungen der Stoffe hängen im wesentlichen ab von dem Zeitpunkt der Anwendung bezogen auf das Entwicklungsstadium der Pflanze sowie von den auf die Pflanzen oder ihre Umgebung ausgebrachten Wirkstoffmengen und von der Art der Applikation. In jedem Fall sollen Wachstumsregulatoren die Kulturpflanzen in bestimmter gewünschter Weise beeinflussen.

Pflanzenwuchsregulierende Stoffe können z.B. zur Hemmung des vegetativen Wachstums der Pflanzen eingesetzt werden. Eine derartige Wuchshemmung ist unter anderem bei Gräsern von wirtschaftlichem Interesse, denn dadurch kann die Häufigkeit der Grasschnitte in Ziergärten, Park- und Sportanlagen, an Straßenrändern, auf Flughäfen oder in Obstanlagen reduziert werden. Von Bedeutung ist auch die Hemmung des Wuchses von krautigen und holzigen Pflanzen an Straßenrändern und in der Nähe von Pipelines oder Überlandleitungen oder ganz allgemein in Bereichen, in denen ein starker Zuwachs der Pflanzen unerwünscht ist.

Wichtig ist auch die Anwendung von Wachstumsregulatoren zur Hemmung des Längenwachstums von Getreide. Hierdurch wird die Gefahr des Umknickens ("Lagerns") der Pflanzen vor der Ernte verringert oder vollkommen beseitigt. Außerdem können Wachstumsregulatoren bei Getreide eine Halmverstärkung hervorrufen, die ebenfalls dem Lagern entgegenwirkt. Die Anwendung von Wachstumsregulatoren zur Halmverkürzung und Halmverstärkung erlaubt es, höhere Düngermengen auszubringen, um den Ertrag zu steigern, ohne daß die Gefahr besteht, daß das Getreide lagert.

Eine Hemmung des vegetativen Wachstums ermöglicht bei vielen Kulturpflanzen eine dichtere Anpflanzung, so daß Mehrerträge bezogen auf die Bodenfläche erzielt werden können. Ein Vorteil der so erzielten kleineren Pflanzen ist auch, daß die Kultur leichter bearbeitet und beerntet werden kann.

Eine Hemmung des vegetativen Wachstums der Pflanzen kann auch dadurch zu Ertragssteigerungen führen, daß die Nährstoffe und Assimilate in stärkerem Maße der Blüten- und Fruchtbildung zugute kommen als den vegetativen Pflanzenteilen.

Mit Wachstumsregulatoren läßt sich häufig auch eine Förderung des vegetativen Wachstums erzielen. Dies ist von großem Nutzen, wenn die vegetativen Pflanzenteile geerntet werden. Eine Förderung des vegetativen Wachstums kann aber auch gleichzeitig zu einer Förderung des generativen Wachstums führen, dadurch daß mehr Assimilate gebildet werden, so daß mehr oder größere Früchte entstehen.

Ertragssteigerungen können in manchen Fällen durch einen Eingriff in den pflanzlichen Stoffwechsel erreicht werden, ohne daß sich Änderungen des vegetativen Wachstums bemerkbar machen. Ferner kann mit Wachstumsregulatoren eine Veränderung der Zusammensetzung der Pflanzen erreicht werden, was wiederum zu einer Qualitätsverbesserung der Ernteprodukte führen kann. So ist es beispielsweise möglich, den Gehalt an Zucker in Zuckerrüben, Zuckerrohr, Ananas sowie in Zitrusfrüchten zu erhöhen oder den Proteingehalt in Soja oder Getreide zu steigern. Auch ist es beispielsweise möglich, den Abbau erwünschter Inhaltsstoffe, wie z.B. Zucker in Zuckerrüben oder Zuckerrohr, mit Wachstumsregulatoren vor oder nach der Ernte zu hemmen. Außerdem läßt sich die Produktion oder der Abfluß von sekundären Pflanzeninhaltsstoffen positiv beeinflussen. Als Beispiel sie die Stimulierung des Latexflusses bei Gummibäumen genannt.

Unter dem Einfluß von Wachstumsregulatoren kann es zur Ausbildung parthenokarper Früchte kommen. Ferner kann das Geschlecht der Blüten beeinflußt werden. Auch kann eine Sterilität des Pollens erzeugt werden, was bei der Züchtung und Herstellung von Hybridsaatgut eine große Bedeutung hat.

Durch den Einsatz von Wachstumsregulatoren läßt sich die Verzweigung der Pflanzen steuern. Einerseits kann durch Brechen der Apikaldominanz die Entwicklung von Seitentrieben gefördert werden, was besonders im Zierpflanzenbau auch in Verbindung mit einer Wuchshemmung sehr erwünscht sein kann. Andererseits ist es aber auch möglich, das Wachstum der Seitentriebe zu hemmen. Für diese Wirkung besteht z.B. großes Interesse im Tabakanbau oder bei der Anpflanzung von Tomaten.

Unter dem Einfluß von Wachstumsregulatoren kann der Blattbestand der Pflanzen so gesteuert werden, daß ein Entblättern der Pflanzen zu einem gewünschten Zeitpunkt erreicht wird. Eine derartige Entlaubung spielt bei der mechanischen Beerntung der Baumwolle eine große Rolle, ist aber auch in anderen Kulturen wie z.B. im Weinbau zur Erleichterung der Ernte von Interesse. Eine Entlaubung der Pflanzen kann auch vorgenommen werden, um die Transpiration der Pflanzen vor dem Verpflanzen herabzusetzen.

Ebenso läßt sich mit Wachstumsregulatoren der Fruchtfall steuern. Einerseits kann ein vorzeitiger Fruchtfall verhindert werden. Andererseits kann aber auch der Fruchtfall oder sogar das Abfallen der Blüten bis zu einem gewünschten Maße gefördert werden ("Ausdünnung"), um die Alternanz zu brechen. Unter Alternanz versteht man die Eigenart einiger Obstarten, endogen bedingt von Jahr zu Jahr sehr unterschiedliche Erträge zu bringen. Schließlich ist es möglich, mit Wachstumsregulatoren zum Zeitpunkt der Ernte die zum Ablösen der Früchte erforderlichen Kräfte zu reduzieren, um eine mechanische Beerntung zu ermöglichen oder eine manuelle Beerntung zu erleichtern.

Mit Wachstumsregulatoren läßt sich ferner eine Beschleunigung oder auch Verzögerung der Reife des Erntegutes vor oder nach der Ernte erreichen. Dieses ist von besonderem Vorteil, weil sich dadurch eine optimale Anpassung an die Bedürfnisse des Marktes herbeiführen läßt. Weiterhin können Wachstumsregulatoren in manchen Fällen die Fruchtausfärbung verbessern. Darüber hinaus kann mit Wachstumsregulatoren auch eine zeitliche Konzentrierung der Reife erzielt werden. Damit werden die Voraussetzungen dafür geschaffen, daß z.B. bei Tabak, Tomaten oder Kaffee eine vollständige mechanische oder manuelle Beerntung in einem Arbeitsgang vorgenommen werden kann.

Durch Anwendung von Wachstumsregulatoren kann ferner die Samen- oder Knospenruhe der Pflanzen beeinflußt werden, so daß die Pflanzen, wie z.B. Ananas oder Zierpflanzen in Gärtnereien, zu einem Zeitpunkt keimen, austreiben oder blühen, an dem sie normalerweise hierzu keine Bereitschaft zeigen. Eine Verzögerung des Austriebes von Knospen oder der Keimung von Samen mit Hilfe von Wachstumsregulatoren kann in frostgefährdeten Gebieten erwünscht sein, um Schädigungen durch Spätfröste zu vermeiden.

Schließlich kann mit Wachstumsregulatoren eine Resistenz der Pflanzen gegen Frost, Trockenheit oder hohen Salzgehalt des Bodens induziert werden. Hierdurch wird die Kultivierung von Pflanzen in Gebieten möglich, die hierzu normalerweise ungeeignet sind.

Der erfindungsgemäß verwendbare Wirkstoff kann in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen des Wirkstoffes mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Der erfindungsgemäß verwendbare Wirkstoffe kann in den Formulierungen in Mischung mit anderen bekannten Wirkstoffen vorliegen, wie Fungizide, Insektizide, Akarizide und Herbizide, sowie in Mischungen mit Düngemitteln und anderen Wachstumsregulatoren.

Der Wirkstoff kann als solcher, in Form seiner Formulierungen oder den daraus bereiteten Anwendungsformen, wie gebrauchsfertige Lösungen, emulgierbare Konzentrate, Emulsionen, Schäume, Suspensionen, Spritzpulver, Pasten, lösliche Pulver, Stäubemittel und Granulate, angewendet werden. Die Anwendung geschieht in üblicher Weise, z.B. durch Gießen, Verspritzen, Versprühen, Verstreuen, Verstäuben, Verschäumen, Bestreichen usw. Es ist ferner möglich, den Wirkstoff nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Die Aufwandmengen können in einem größeren Bereich variiert werden. Im allgemeinen verwendet man pro Hektar Bodenfläche 0,01 bis 50 kg, bevorzugt 0,05 bis 10 kg an Wirkstoff.

Für die Anwendungszeit gilt, daß die Anwendung des Wachstumsregulators in einem bevorzugten Zeitraum vorgenommen wird, dessen genaue Abgrenzung sich nach den klimatischen und vegetativen Gegebenheiten richtet.

Die Herstellung und die Verwendung des erfindungsgemäß verwendbaren Wirkstoffes werden durch die folgenden Beispiele veranschaulicht.

Herstellungsbeispiele

Beispiel 1

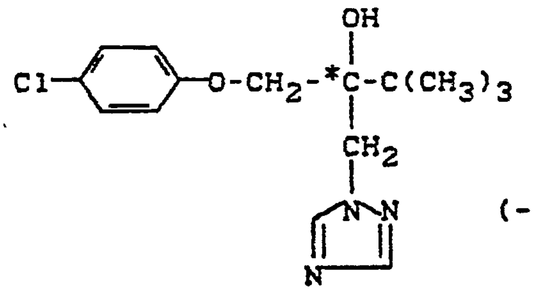

(-)-Antipode

1. Stufe

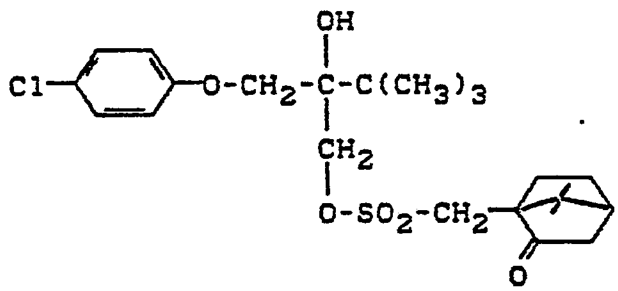

Zu 12 g (0,05 Mol) racemischem 2-(4-Chlorphenoxymethyl)-2-tert.-Butyl-oxiran in 150 ml Acetonitril werden bei 20°C unter Rühren 12,5 g (0,05 Mol) (+)-Campher-10-sulfonsäure gegeben. Man läßt 16 Stunden bei Raumtemperatur stehen, gießt in Wasser und extrahiert mit Methylenchlorid. Die organische Phase wird zweimal mit Wasser gewaschen, über Magnesiumsulfat getrocknet und im Vakuum eingeengt. Man erhält 18 g an Diastereomerengemisch des (+)-Campher-10-sulfonsäure-[2-(4-chlorphenoxymethyl)-3,3-dimethyl-2-hydroxy-1-butyl]-esters als viskoses Öl, aus dem teilweise ein reines Diastereomer (Fp.: 103°C) auskristallisiert.

Mittels HPLC an Kieselgel im System Hexan/Isopropylether wird das Diastereomerengemisch getrennt. Man erhält

a) 5,2 g Fraktion 1 als farbloses Öl mit einem Drehwinkel von $[\alpha]_D^{20} = +21,6°$ ($CHCl_3$, C = 0,67) und

b) 5,0 g Fraktion 2 vom Schmelzpunkt 103°C mit einem Drehwinkel von $[\alpha]_D^{20} = +32,8°$ ($CHCl_3$, C = 1,02).

2. Stufe

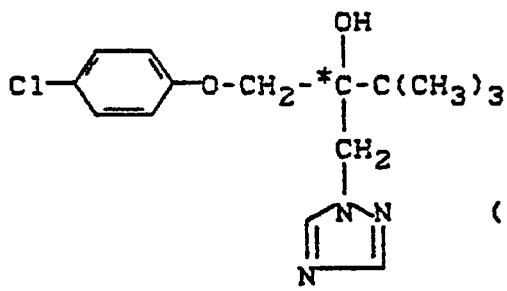

(-)-Antipode

5,2 g (11 mMol) (+)-Campher-10-sulfonsäure-[2-(4-chlorphenoxymethyl)-3,3-dimethyl-2-hydroxy-1-butyl]-ester gemäß Fraktion 1 der ersten Stufe werden mit 3 g (43 mMol) 1,2,4-Triazol und 3 g (21 mMol) Kaliumcarbonat in 60 ml Acetonitril unter Rückfluß erhitzt. Anschließend gibt man das Reaktionsgemisch auf Wasser, extrahiert mit Methylenchlorid und engt die organische Phase ein. Das Rohprodukt wird mittels Säulenchromatographie im System Chloroform/Essigester (3:1) gereinigt. Man erhält 2,2 g (68 % der Theorie) vom (-)-Antipoden des 2-(4-Chlorphenoxymethyl)-3,3-dimethyl-1-(1,2,4-triazol-1-yl)-butan-2-ols vom Schmelzpunkt 57°C mit einem Drehwinkel von $[\alpha]_D^{20} = -111,4°$ ($CHCl_3$).

Beispiel 2

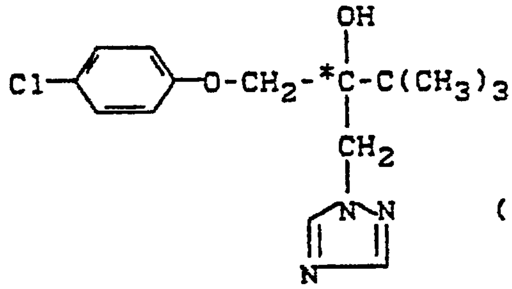

(+)-Antipode

1. Stufe

Vergleiche hierzu Beispiel 1, 1. Stufe, Fraktion 2.

2. Stufe

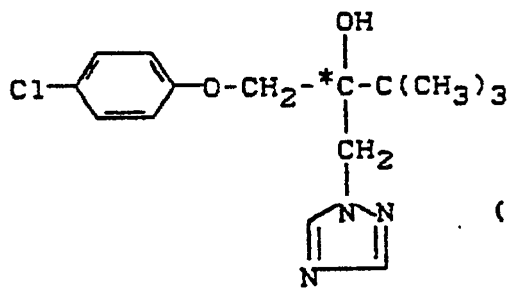

(+)-Antipode

8,0 g (17 mMol) (+)-Campher-10-sulfonsäure-[2-(4-chlorphenoxymethyl)-3,3-dimethyl-2-hydroxy-1-butyl]-ester gemäß Fraktion 2 der 1. Stufe des Beispiels 1 werden mit 5 g (72 mMol) 1,2,4-Triazol und 5 g (35 mMol) Kaliumcarbonat in 80 ml Acetonitril unter Rühren 8 Stunden unter Rückfluß erhitzt. Anschließend gibt man das Reaktionsgemisch auf Wasser, extrahiert mit Methylenchlorid und engt die organische Phase ein. Der ölige Rückstand wird in Cyclohexan gelöst. Hierbei kristallisiert das symmetrische Triazolderivat aus (1,2 g vom Schmelzpunkt 220°C), welches abfiltriert wird.

Das Filtrat wird im Vakuum eingeengt und der ölige Rückstand wird mit Petrolether zur Kristallisation gebracht. Man erhält 3,2 g (57 % der Theorie) vom (+)-Antipoden des 2-(4-Chlorphenoxymethyl)-3,3-dimethyl-1-(1,2,4-triazol-1-yl)-butan-2-ols vom Schmelzpunkt 57°C mit einem Drehwinkel von $[\alpha]_D^{20}$ = +113° ($CHCl_3$).

In den folgenden Verwendungsbeispielen werden die nachstehend angegebenen Verbindungen bezüglich ihrer pflanzenwuchsregulierenden Eigenschaften geprüft:

(A) =

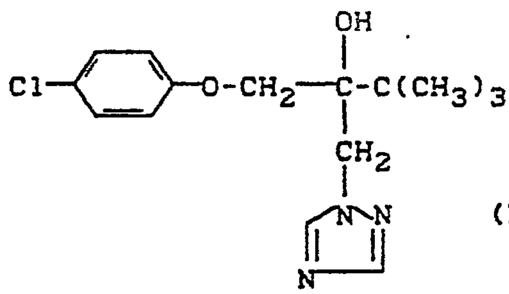

(Racemat)

(B) =

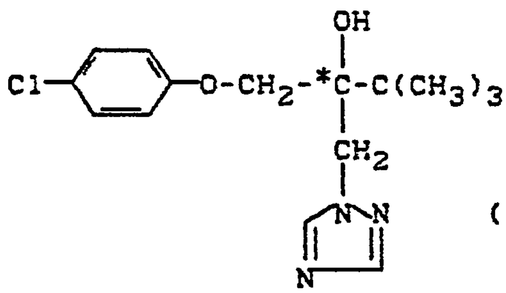

(+)-Antipode

(I) =

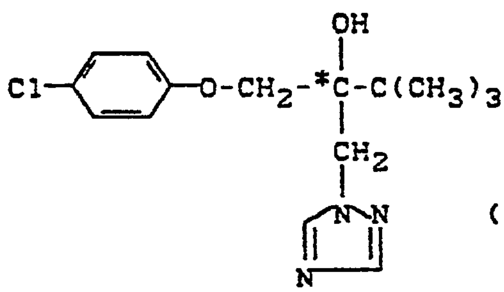

(-)-Antipode

(erfindungsgemäß)

Beispiel A

Wachstum bei Gras (Fectuca pratensis)

Lösungsmittel: 30 Gewichtsteile Dimethylformamid
Emulgator: 1 Gewichtsteil Polyoxyethylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Gras (Festuca pratensis) wird im Gewächshaus bis zu einer Wuchshöhe von 5 cm angezogen. In diesem Stadium werden die Pflanzen tropfnaß mit den Wirkstoffzubereitungen besprüht. Nach 2 Wochen wird bei allen Pflanzen der Zuwachs gemessen und in Prozent des Zuwachses der Kontrollpflanzen berechnet. Es bedeuten 100 % einen Zuwachs wie bei den Kontrollen, Werte unter 100 % geben eine Wuchshemmung, Werte über 100 % eine Wuchsförderung wieder.

Wirkstoffe, Wirkstoffkonzentrationen und Versuchsergebnisse gehen aus der folgenden Tabelle hervor.

Tabelle A

Wachstum bei Gras (Festuca pratensis)

| Wirkstoff | Konzentration in % | Zuwachs in % |
|---|---|---|
| - (Kontrolle) | - | = 100 |
| (I) (erfindungsgemäß) | 0,05 | 24 *) |
| (B) | 0,05 | 108 |

*) dunkelgrüne Blattfarbe

Beispiel B

Wachstum bei Gerste

Lösungsmittel: 30 Gewichtsteile Dimethylformamid
Emulgator: 1 Gewichtsteil Polyoxyethylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Gerstepflanzen werden im Gewächshaus bis zum 2-Blattstadium angezogen. In diesem Stadium werden die Pflanzen tropfnaß mit den Wirkstoffzubereitungen besprüht. Nach 2 Wochen wird bei allen Pflanzen der Zuwachs gemessen und in Prozent des Zuwachses der Kontrollpflanzen berechnet. Es bedeuten 100 % einen Zuwachs wie bei den Kontrollen, Werte unter 100 % geben eine Wuchshemmung, Werte über 100 % eine Wuchsförderung wieder.

Wirkstoffe, Wirkstoffkonzentrationen und Versuchsergebnisse gehen aus der folgenden Tabelle hervor.

Tabelle B

Wachstum bei Gerste

| Wirkstoff | Konzentration in % | Zuwachs in % |
|---|---|---|
| - (Kontrolle) | - | = 100 |
| (I) (erfindungsgemäß) | 0,05 | 28 *) |
| | 0,025 | 29 *) |
| | 0,0125 | 43 *) |
| | 0,0062 | 53 |
| (B) | 0,05 | 97 |
| | 0,025 | 99 |
| | 0,0125 | 92 |
| | 0,0062 | 99 |
| (A) | 0,05 | 60 |
| | 0,025 | 48 |
| | 0,0125 | 70 |
| | 0,0062 | 81 |

*) dunkelgrüne Blattfarbe

Beispiel C

Wachstum bei Zuckerrüben

Lösungsmittel: 30 Gewichtsteile Dimethylformamid
Emulgator: 1 Gewichtsteil Polyoxyethylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Zuckerrüben werden im Gewächshaus bis zur vollen Ausbildung der Keimblätter angezogen. In diesem Stadium werden die Pflanzen tropfnaß mit den Wirkstoffzubereitungen besprüht. Nach 14 Tagen wird bei allen Pflanzen der Zuwachs gemessen und in Prozent des Zuwachses der Kontrollpflanzen berechnet. Es bedeuten 100 % einen Zuwachs wie bei den Kontrollen, Werte unter 100 % geben eine Wuchshemmung, Werte über 100 % eine Wuchsförderung wieder.

Wirkstoffe, Wirkstoffkonzentrationen und Versuchsergebnisse gehen aus der folgenden Tabelle hervor.

Tabelle C

Wachstum bei Zuckerrüben

| Wirkstoff | Konzentration in % | Zuwachs in % |
|---|---|---|
| - (Kontrolle) | - | = 100 |
| (I) (erfindungsgemäß) | 0,05 | 5 *) |
| | 0,025 | 9 *) |
| | 0,0125 | 18 *) |
| | 0,0062 | 28 *) |
| (B) | 0,05 | 42 *) **) |
| | 0,025 | 65 *) |
| | 0,0125 | 74 *) |
| | 0,0062 | 79 *) |
| (A) | 0,05 | 9 *) **) |
| | 0,025 | 18 *) |
| | 0,0125 | 23 *) |

*) dunkelgrüne Blattfarbe, dicke Blätter

**) Blattdeformationen

Beispiel D

Wachstum bei Sojabohnen

Lösungsmittel: 30 Gewichtsteile Dimethylformamid
Emulgator: 1 Gewichsteil Polyoxyethylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Sojabohnen werden im Gewächshaus bis zur vollen Entfaltung des 1. Folgeblattes angezogen. In diesem Stadium werden die Pflanzen tropfnaß mit den Wirkstoffzubereitungen besprüht. Nach 2 Wochen wird bei allen Pflanzen der Zuwachs gemessen und in Prozent des Zuwachses der Kontrollpflanzen berechnet. Es bedeuten 100 % einen Zuwachs wie bei den Kontrollen, Werte unter 100 % geben eine Wuchshemmung, Werte über 100 % eine Wuchsförderung wieder.

Wirkstoffe, Wirkstoffkonzentrationen und Versuchsergebnisse gehen aus der folgenden Tabelle hervor.

Tabelle D

Wachstum bei Sojabohnen

| Wirkstoff | Konzentration in % | Zuwachs in % |
|---|---|---|
| - (Kontrolle) | - | = 100 |
| (I) (erfindungsgemäß) | 0,05 | 9 *) |
| | 0,025 | 10 *) |
| | 0,0125 | 14 *) |
| | 0,0062 | 17 *) |
| (B) | 0,05 | 66 |
| | 0,025 | 99 |
| | 0,0125 | 87 |
| | 0,0062 | 94 |
| (A) | 0,05 | 12 *) |
| | 0,025 | 14 *) |
| | 0,0125 | 21 *) |
| | 0,0062 | 26 *) |

*) dunkelgrüne Blattfarbe

**Patentansprüche**

1. Verwendung des (-)-Antipoden des 2-(4-Chlorphenoxymethyl)-3,3-dimethyl-1-(1,2,4-triazol-1-yl)-butan-2-ols der Formel

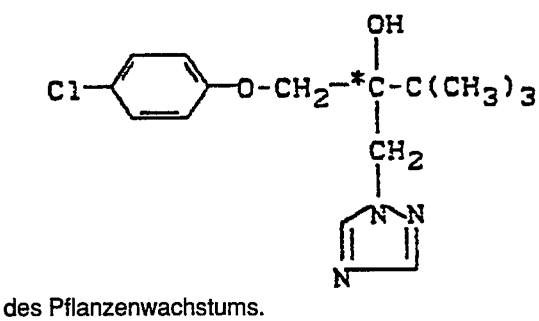

(I)

zur Regulierung des Pflanzenwachstums.

2. Verfahren zur Regulierung des Pflanzenwachstums, dadurch gekennzeichnet, daß man den (-)-Antipoden des 2-(4-Chlorphenoxymethyl)-3,3-dimethyl-1-(1,2,4-triazol-1-yl)-butan-2-ols der Formel (I) auf die Pflanzen und/oder deren Lebensraum ausbringt.

## Claims

1. Use of the (-)-antipode of 2-(4-chlorophenoxymethyl)-3,3-dimethyl-1-(1,2,4-triazol-1-yl)-butan-2-ol of the formula

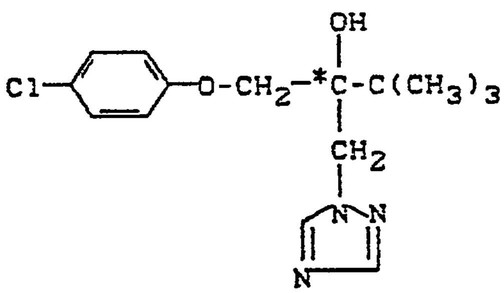

(I)

for regulating plant growth.

2. Method of regulating plant growth, characterized in that the (-)-antipode of 2-(4-chlorophenoxymethyl)-3,3-dimethyl-1-(1,2,4-triazol-1-yl)-butan-2-ol of the formula (I) is applied to plants and/or their environment.

## Revendications

1. Utilisation du (-)-antipode du 2-(4-chlorophénoxyméthyl)-3,3-diméthyl-1-(1,2,4-triazole-1-yl)-butane-2-ol de formule

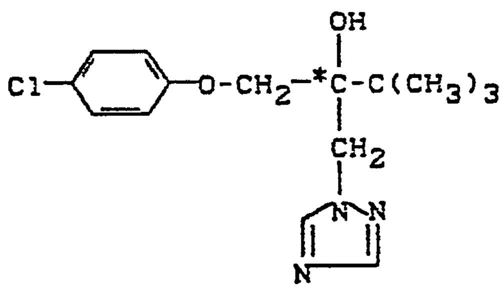

(I)

pour la régulation de la croissance de plantes.

2. Procédé pour la régulation de la croissance de plantes, caractérisé en ce qu'on applique le (-)-antipode du 2-(4-chlorophénoxyméthyl)-3,3-diméthyl-1-(1,2,4-triazole-1-yl)-butane-2-ol de formule (I) sur les plantes et/ou sur leur milieu.